# EUROPÄISCHE PATENTSCHRIFT

(11) **EP 1 053 934 B1**
(45) Veröffentlichungstag und Bekanntmachung des Hinweises auf die Patenterteilung: **22.09.2004**
(21) Anmeldenummer: 00109112.3
(22) Anmeldetag: 04.05.2000
(51) Int. Cl.: B64C 1/14

(54) **Tür eines Luftfahrzeuges**
Aircraft door
Porte d'aéronef

(30) Priorität: 21.05.1999 DE 19923441
(43) Veröffentlichungstag der Anmeldung: 22.11.2000
(73) Patentinhaber: Eurocopter Deutschland GmbH, 86609 Donauwörth (DE)
(72) Erfinder: Erben, Hannes, 86609 Donauwörth (DE)
(74) Vertreter: Hansmann, Dierk, Dipl.-Ing.

(56) Entgegenhaltungen:
- DE-A- 19 730 918
- FR-A- 2 450 339
- US-A- 5 031 863

## Beschreibung

Die Erfindung betrifft eine Tür eines Luftfahrzeuges, wobei deren Struktur mindestens durch mehrere, in unterschiedlichen Ebenen zueinander beabstandet liegende Träger gebildet ist, die die Breite der Tür besitzen und mit einer Beplankung der Tür verbunden sind und die Enden der Träger je ein Anschlagmittel mit Auflagefläche tragen, welches mit seiner Auflagefläche bei Schließstellung der Tür in Durckbelastungsrichtung liegend mit der Auflagefläche eines vom Rahmen getragenen Anschlagmittels in Anlage ist.

Solch eine Tür ist z.B. aus der DE 197 30 918 A1 bekannt.

Die bei Flugbetrieb entstehende Druckdifferenz zwischen Passagierraum und äußerer Atmosphäre führt zu Drucktasten, die von der Türstruktur aufgenommen und auf den Rahmen der Tür übertragen werden müssen. Der Rahmen leitet die übernommenen Kräfte auf die Rumpfstruktur des Luftfahrzeuges. Die an der Tür angreifenden Drucklasten wirken in Richtung des Druckgefälles, also vom Passagierinnenraum im wesentlichen in Richtung nach außerhalb des Rumpfes. Um diese Drucklasten durch die Türstruktur aufzufangen, wird die Türstruktur im wesentlichen durch mehrere in unterschiedlichen, horizontalen Ebenen zueinander beabstandete Träger gebildet. Die Träger sind entlang der Türbreite ausgerichtet. Diese Träger sind mit der Außen- und Innenbeplankung der Tür verbunden und verleihen der Tür Steifigkeit in Richtung der wirkenden Drucklasten.

Die Tür besitzt weiterhin Elemente, um die Drucktasten auf den Rahmen und damit auf die Rumpfstruktur zu übertragen. Hierzu sind an jedem Trägerende ein Anschlagmittel und gegenüberliegend am Rahmen das entsprechend rahmenseitige Anschlagmittel vorgesehen. Somit sind die Anschlagmittel in Höhe eines Trägerendes paarweise vorhanden. Üblicherweise sind an der Tür in Abhängigkeit der Anzahl der Träger etwa 6 bis 8 Anschlagmittel angeordnet.

Im verschlossenen Zustand kommt die Tür mit ihren türseitigen Anschlagmitteln in Drucklastrichtung an den Anschlagmitteln des Rahmens zur Anlage. Jeder Träger der Tür wird somit entgegen der Drucklastrichtung abgestützt. Bei Bruch eines oder mehrerer dieser Anschlagmittel entstehen Lastumlagerungen vom nun ungestützten Träger der Tür auf die verbleibenden Anschlagmittel. Es kommt zu zusätzlichen Schub- und Torsionslasten gegenüber der Türstruktur. Es könnte zu einer Verformung der Türstruktur kommen und die Gefahr entstehen, daß sich die Druckdichtigkeit der Tür verringert.

Die Anschlagmittel sind während des Flugbetriebes einer dynamischen Belastung ausgesetzt. Dies kann zu unbemerkter Rißbildung im Anschlagmittel führen bis hin zum Ausfall des Anschlagmittels.

Aufgabe der Erfindung ist es, unter Einsatz von geringstem Aufwand die Sicherheit gegenüber Ausfall eines Anschlagmittels zur Abstützung der geschlossenen Tür eines Luftfahrzeuges weiter zu verbessern.

Die Aufgabe wird dadurch gelöst, daß in Belastungsrichtung hintereinander liegend mindestens zwei Auflageflächen angeordnet sind, wobei nur eine der beiden Auflageflächen in Anlage mit einer der beiden rahmenseitigen Auflageflächen ist. Bei Ausfall einer bisher bestehenden Kraftübertragung über die Auflageflächen kann sofort ersatzweise eine zweite redundante Kraftübertragung zur Wirkung kommen. Diese zweite, sofort verfügbare Kraftübertragung kann ersatzweise Drucklasten von der Türstruktur auf den Rahmen übertragen. Diese Kraftübertragung wird ohne großen Aufwand ermöglicht.

Nach einer Ausgestaltung der Erfindung können an einem Anschlagmittel in Belastungsrichtung hintereinander liegend mindestens zwei Auflageflächen ausgebildet werden. Das Anschlagmittel hat mindestens zwei Stege ausgebildet, an denen die Auflageflächen gebildet werden.

Eine andere Möglichkeit besteht darin, daß zwei oder mehrere, einzelne Anschlagmittel mit Auflagefläche in Flucht, hintereinander liegend angeordnet werden. Diese Anschlagmittel wären dann geometrisch untereinander getrennt.

Eine weitere vorteilhafte Ausgestaltung besteht darin, daß das gewählte Anschlagmittel in die Struktur des Rahmens und/oder der Tür integriert ist.

Die Erfindung ermöglicht eine Erhöhung der Sicherheit bei geringem technischen Aufwand. Es brauchte zukünftig nur der Standardlastfall bei der Dimensionierung der Tür berücksichtigt werden. Die bisher notwendigen Versteifungen der Tür könnten als Auslegungskriterien für die Türstruktur entfallen. Eine deutliche Gewichtsreduzierung trotz schwerer Anschlagmittel wäre die Folge. Weiterhin wäre eine Kosteneinsparung erzielbar.

Ein Ausführungsbeispiel der Erfindung ist in der Zeichnung dargestellt und im folgenden näher beschrieben. Es zeigen
- **Figur 1**: schematisierte Ansicht einer geschlossenen Tür im Rumpfinneren eines Luftfahrzeuges nach dem Stand der Technik
- **Figur 2**: schematisierter Querschnitt einer geschlossenen Tür im Eingriff zu einem Anschlagmittel des Rahmens

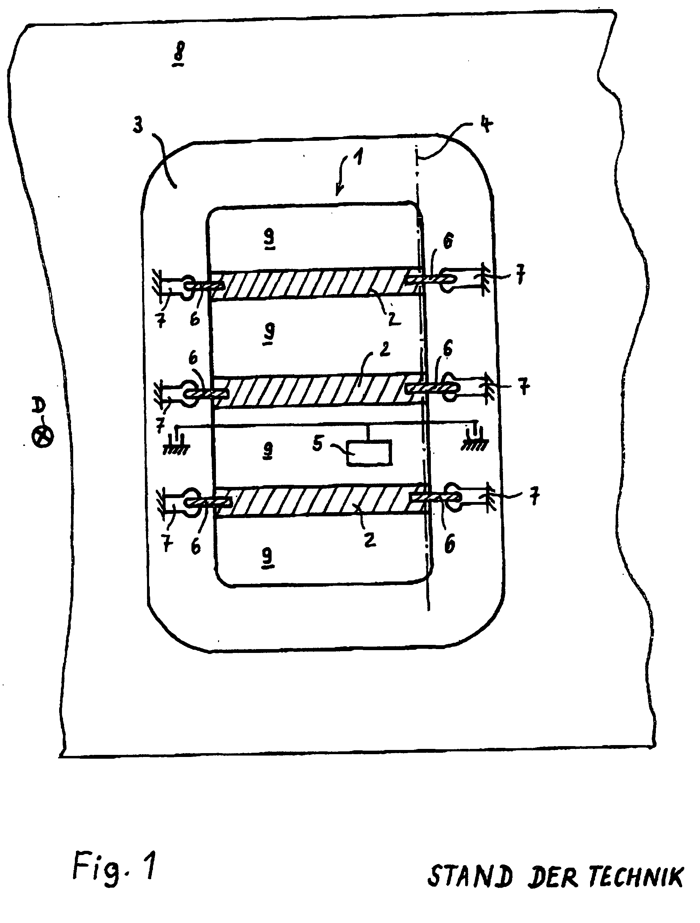

Die nach dem Stand der Technik bekannte Tür 1 eines Luftfahrzeuges hat gemäß **Figur 1** in der Struktur mindestens mehrere in unterschiedlichen, meist horizontalen Ebenen zueinander beabstandet liegende Träger 2 angeordnet. Die Träger könnten in anderen Anwendungsfällen auch in nicht horizontalen Ebenen angeordnet sein. Das wäre keine Einschränkung für die Funktion der Erfindung. Die Figur 1 zeigt schematisch die geschlossene Tür vom Rumpfinneren her. Eine solche Tür ist einsetzbar bei Flugzeugen, Drehflüglern oder Transportkapseln eines Ballons. Die Träger 2 besitzen die Breite der Tür 1. Die Träger 2 sind mit der Beplankung 9 der Tür verbunden. Der einzelne Träger 2 besitzt an seinen Enden je ein türseitiges Anschlagmittel 6 mit einer Auflagefläche. Die türseitigen Anschlagmittel 6 sind mit der Auflagefläche bei Schließstellung der Tür 1 mit der Auflagefläche des vom Rahmen 3 getragenen Anschlagmittels 7 in Anlage. Die entsprechenden Auflageflächen sind so ausgebildet, daß sie in Belastungsrichtung liegend einander formschlüssig berühren.

Die Tür 1 besitzt weiterhin einen Ent- und Verriegelungsmechanismus 5 mit Gestänge und Steuerung. Ebenso besitzt die Tür 1 eine Achse 4 zum Schwenken. Die Druckbelastungsrichtung infolge der Druckdifferenz ist entsprechend dem Pfeilkreuz in die Bildebene hinein gerichtet.

Türseitiges Anschlagmittel 6 und rahmenseitiges Anschlagmittel 7 sind paarweise in horizontaler Ebene des Trägers angeordnet. Die Träger 2 der Tür 1 stützen sich mittels der Anschlagmittel 6 in Druckbelastungsrichtung (Pfeilkreuz) an den rahmenseitigen Anschlagmitteln 7 ab. Dadurch wird gesichert, daß Drucktasten von der Türstruktur auf den Rahmen 3 sicher übertragen werden können. Der Bruch eines oder mehrerer Anschlagmittel 6, 7 kann zu hohen Spannungen oder zu großen Verformungen an der Tür 1 führen. Im ungünstigsten Fall kann dies zum Verlust der Druckdichtigkeit der Tür führen.

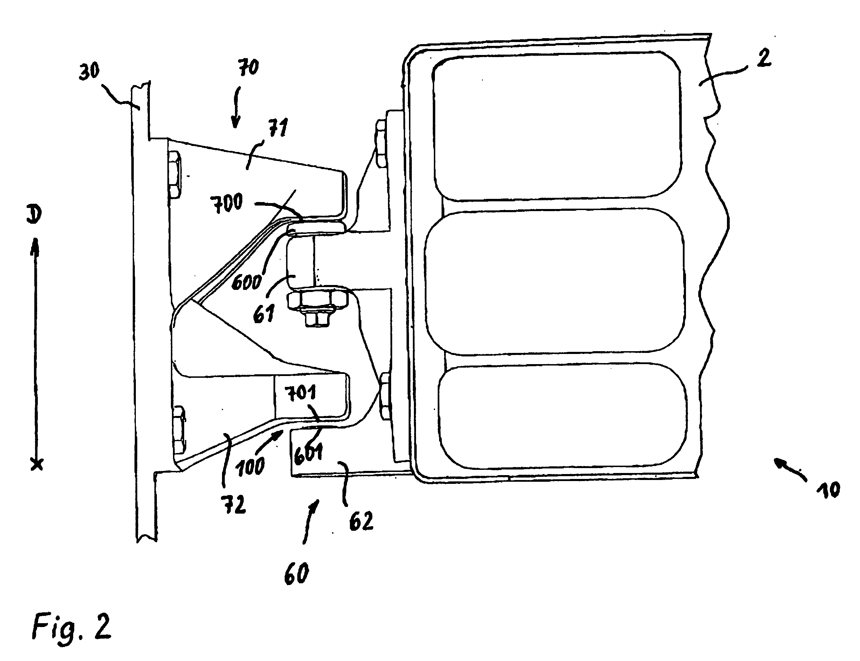

Die **Figur 2** zeigt eine schematisierte Draufsicht auf einen Träger und Rahmenabschnitt mit erfindungsgemäßem Anschlagmittel. Am Ende des Trägers 2 ist türseitig ein Anschlagmittel 60 angeordnet. Das kann beispielsweise durch Schraubverbindungen erfolgen. Es ist aber auch möglich, das Anschlagmittel als integralen Bestandteil des Trägers auszubilden. Das Anschlagmittel 60 hat zwei Stege 61, 62 ausgebildet, die in Drucklastrichtung D hintereinander angeordnet sind. Jeder Steg 61, 62 besitzt eine Auflagefläche 600 bzw. 601. Mit Erreichen des Arretierzustandes bei der Schließstellung der Tür 10 wird das Anschlagmittel 60 in Eingriff gebracht mit dem entsprechenden Anschlagmittel 70 des Rahmens 30. Das Anschlagmittel 70 hat ebenfalls zwei Stege 71, 72 ausgebildet, die ebenfalls in Druckrichtung D zueinander in Flucht liegend angeordnet sind. Die dortigen Auflageflächen 700 bzw. 701 liegen den entsprechenden Auflageflächen 600 bzw. 601 gegenüber. In Schließstellung der Tür ist das Anschlagmittel 60 mit seiner Auflagefläche 600 in Eingriff gebracht mit der Auflagefläche 700 des Anschlagmittels 70, wobei die Auflageflächen 600 und 700 formschlüssig in Anlage sind. Es wird somit eine Lastübertragung von der Tür 10 auf den Rahmen 30 und die Rumpfstruktur ermöglicht.

Die Auflagefläche 601 hat einen kleinen Spalt 100 gegenüber der Auflagefläche 701. Erst bei Ausfall eines der vorhergehenden Stege 61, 71 verschwindet der Spalt 100 und die Auflageflächen 701 bzw. 601 kommen zur Anlage. Der Spalt 100 stellt eine Reservestellung für beide Stege 62, 72 dar. Damit wird erreicht, daß insbesondere hoher Justierungsaufwand der Auflageflächen 601, 701 gegenüber den bereits aufliegenden Auflageflächen 600, 700 vermieden werden kann.

Die Erfindung ermöglicht es, daß bei Ausfall einer bisher bestehenden Kraftübertragung über die Auflageflächen 600, 700 eine zweite redundante Kraftübertragung geschaffen werden kann, die nun ersatzweise Last an diesem Ende des Trägers 2 überträgt. Dies stellt eine Erhöhung der Sicherheit bei geringem technischen Aufwand dar. Damit wird ein Gesamtausfall der Anschlagmittel mit der Gefahr einer Türverformung mit nachfolgendem Dichtheitsverlust so unwahrscheinlich, daß dieser Gesamtausfall der Tür möglicherweise nicht mehr berücksichtigt werden müßte. Es wäre dann nur noch der Standardlastfall für die Tür maßgeblich.
Die erwähnten Lastumlagerungen und damit die dafür notwendigen Versteifungen der Tür könnten als Auslegungskriterium für die Türstruktur entfallen. Das hätte eine deutliche Gewichtsreduzierung trotz schwererer Anschlagmittel 60, 70 zur Folge. Das könnte bedeuten, daß weniger Träger 2 einzusetzen wären und die Innenbeplankung der Tür entfallen könnte. Das wären enorme Kosteneinsparungen.

Die Erfindung ist anwendbar an Türen für Flugzeuge, Drehflügler oder Transportcontainern von Flugballons.

## Patentansprüche

1. Tür eines Luftfahrzeuges, deren Struktur mindestens durch mehrere in unterschiedlichen Ebenen zueinander beabstandet liegende Träger gebildet ist, die die Breite der Tür besitzen und mit einer Beplankung der Tür verbunden sind und die Enden der Träger je ein Anschlagmittel mit Auflagefläche tragen, welches mit seiner Auflagefläche bei Schließstellung der Tür in Druckbelastungsrichtung liegend mit der Auflagefläche eines vom Rahmen getragenen Anschlagmittels in Anlage ist, **dadurch gekennzeichnet, daß** in Belastungsrichtung (D) hintereinander liegend mindestens zwei Auflageflächen (600, 601) angeordnet sind, wobei eine (600) der beiden Auflageflächen in Anlage mit einer (700) der beiden rahmenseitigen Auflageflächen ist.

2. Tür nach Anspruch 1, **dadurch gekennzeichnet, daß** an einem Anschlagmittel (60, 70) in Belastungsrichtung (D) hintereinander liegend mindestens zwei Auflageflächen (600, 601; 700, 701) ausgebildet sind.

3. Tür nach Anspruch 1, **dadurch gekennzeichnet, daß** geometrisch getrennt mindestens zwei Anschlagmittel in Belastungsrichtung (D) hintereinander liegend angeordnet sind.

4. Tür nach einem der vorhergehenden Ansprüche, **dadurch gekennzeichnet, daß** das Anschlagmittel (60) in die Struktur der Tür (10) und das andere Anschlagmittel (70) in die Struktur des Rahmens (30) integrierbar ist.

## Claims

1. Aircraft door, the structure of which is formed at least by a plurality of beams, which lie spaced apart from one another in different planes, have the width of the door and are connected to panelling of the door and the ends of the beams each carry a stop means with supporting surface, which stop means is situated with its supporting surface lying in closed position of the door in pressure load direction in abutment with the supporting surface of a stop means carried by the frame, **characterized in that** at least two supporting surfaces (600, 601) are disposed successively in load direction (D), wherein one (600) of the two supporting surfaces is in abutment with one (700) of the two frame-side supporting surfaces.

2. Door according to claim 1, **characterized in that** on a stop means (60, 70) at least two supporting surfaces (600, 601; 700, 701) are formed successively in load direction (D).

3. Door according to claim 1, **characterized in that** in a geometrically separated manner at least two stop means are disposed successively in load direction (D).

4. Door according to one of the preceding claims, **characterized in that** the stop means (60) is integrable into the structure of the door (10) and the other stop means (70) is integrable into the structure of the frame (30).

## Revendications

1. Porte d'un aéronef dont la structure est composée d'au moins plusieurs supports distants les uns des autres dans des plans différents, supports ayant la largeur de la porte, raccordés à un bordé de la porte et les extrémités des supports portant chacun un matériel de levage à surface d'applique, le matériel de levage étant, en position fermée de la porte dans la direction de la charge de compression, joint à la surface d'applique d'un matériel de levage porté par le châssis, **caractérisé en ce que** au moins deux surfaces d'applique (600, 601) ont été disposées l'une derrière l'autre dans la direction de charge, une (600) des deux surfaces d'applique ayant été raccordée à une (700) des deux surfaces d'applique situées côté châssis ;

2. Porte selon la revendication 1, **caractérisé en ce que** au moins deux surfaces d'applique (600, 601 ; 700, 701) ont été disposées l'une derrière l'autre dans la direction de charge (D), contre un matériel de levage (60, 70).

3. Porte selon la revendication 1, **caractérisé en ce que** au moins deux matériels de levage ont été disposés les uns derrière l'autre dans la direction de charge (D), avec séparation géométrique.

4. Porte selon une des revendications précédentes, **caractérisée en ce que** le matériel de levage (60) peut être intégré dans la structure de la porte (10) et l'autre matériel de levage (70) dans la structure du châssis (30).
